# EUROPEAN PATENT APPLICATION

(11) **EP 3 355 443 A1**
(43) Date of publication of application: **01.08.2018**
(21) Application number: 17208000.4
(22) Date of filing: 18.12.2017
(51) Int. Cl.: H02K 1/27

(54) **OUTER ROTOR TYPE MOTOR**

(30) Priority: 30.01.2017 JP 2017014485
(71) Applicant: Shinano Kenshi Kabushiki Kaisha, Nagano 386-0498 (JP)
(72) Inventor: MAKI, Naohiko, Ueda-shi, Nagano 386-0498 (JP); YAMADA, Takuji, Ueda-shi, Nagano 386-0498 (JP); KUROIWA, Hiroki, Ueda-shi, Nagano 386-0498 (JP)
(74) Representative: Addiss, John William

(57) **Abstract**

To provide an outer rotor type motor including a rotor magnet capable of reducing a cogging torque for realizing smooth rotation of a rotor and having good durability and weatherability. A rotor magnet (14) is arranged so as to be divided into plural segment magnets (13) on an inner peripheral surface of a rotor yoke (12) in a circumferential direction, an anisotropic magnet having parallel orientation is used as each segment magnet (13) and a central portion (13b) of a magnetic-flux generation surface (13a) facing a magnetic-flux action surface of a stator pole tooth (4a) is formed in a convex surface where an interval with respect to the stator pole tooth (4a) is the smallest.

## Description

### Technical Field

The present invention relates to an outer rotor type motor.

### Background Art

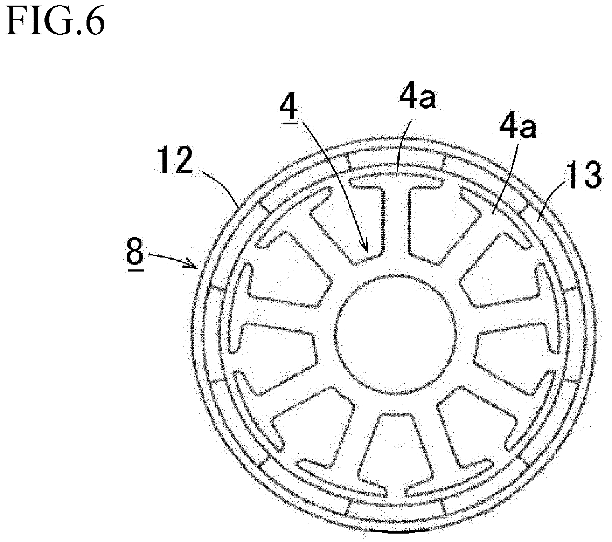

For example, a structure of a stator and a rotor of an outer rotor type three-phase DC brushless motor will be explained with reference to Fig. 6. A structure of a stator 1 will be explained. As a stator core 4, a laminated core in which electromagnetic steel sheets are laminated is used. A plurality of pole teeth 4a are provided to protrude from an annular core body to the outer side in a radial direction. Not-shown coils are wound around the respective pole teeth 4a. The stator core 4 is mounted by being press-fitted and bonded to an outer periphery of a not-shown bearing housing. A bearing is fitted into the bearing housing.

In a rotor 8, a rotor yoke 12 formed in a cup shape is caulked and integrally fastened to a rotor hub fixed to one end of a rotor shaft. A rotor magnet 14 in which segment magnets 13 magnetized in the radial direction are annually arranged at prescribed intervals is mounted on an inner peripheral surface of the rotor yoke 12. After the stator 1 is assembled, the rotor shaft of the rotor 8 is fitted so as to be inserted into the bearing of the bearing housing. At this time, assembling is performed so that the pole teeth 4a of the stator core 4 face the segment magnets 13.

The rotor magnet 14 is mounted so that a magnet formed in a ring shape or segment-type magnets are bonded to the inner peripheral surface of the rotor yoke 12. As the rotor magnet 14, an anisotropic plastic magnet in which N-poles and S-poles are alternately magnetized in a circumferential direction is used. The anisotropic plastic magnet has radial orientation, parallel orientation, polar-anisotropic orientation and so on as magnetization directions.

A motor in which a portion of the rotor magnet facing the stator pole teeth is magnetized in the polar-anisotropic orientation and a portion facing a magnetic detection sensor is magnetized in the radial orientation or the parallel orientation is known (refer to Patent Literature 1: JP-A 2013-162697).

### Summary of Invention

### Technical Problem

In either case where the shape of the rotor magnet is a ring type or the segment type, a cogging torque is increased when a magnet with a uniform plate thickness is used.

When the magnetization direction of the anisotropic plastic magnet is the radial orientation, flux change in an end surface of the magnet in the circumferential direction becomes steep and the cogging torque is increased.

As the anisotropic plastic magnet has a low mechanical strength, there are problems in assembly, in which a corner is chipped or easily fractured.

### Solution to Problem

The present invention has been accomplished under the above circumferences, and an aim thereof is to provide an outer rotor type motor including a rotor magnet capable of reducing a cogging torque for realizing smooth rotation of a rotor and having high durability and weatherability.

In order to achieve the above aim, the present invention has the following structures.

An outer rotor type motor includes a stator having a stator core in which coils are wound around stator pole teeth and a rotor in which a rotor shaft integrally fastened to a central part of a rotor yoke having a rotor magnet facing the stator pole teeth is pivotally supported so as to rotate, in which the rotor magnet is arranged so as to be divided into plural segment magnets on an inner peripheral surface of the rotor yoke in a circumferential direction, an anisotropic magnet having parallel orientation is used as each segment magnet and a central portion of a magnetic-flux generation surface facing a magnetic-flux action surface of the stator pole tooth is formed in a convex surface where an interval with respect to the stator pole tooth is the smallest.

According to the above structure, the central portion of the magnetic-flux generation surface facing the magnetic-flux action surface of the stator pole tooth in the anisotropic segment magnet having parallel orientation is formed in the convex surface, therefore, variation in magnetic flux is reduced in the vicinity of an end surface in the circumferential direction, which reduces the cogging torque and realizes smooth rotation of the rotor as compared with a case where magnets having a uniform plate thickness is used.

It is preferable that an anisotropic ferrite sintered magnet is used as the segment magnet and that the magnetic-flux generation surface is a curved surface with a smaller curvature than a fixed surface fixed to the rotor yoke.

When the magnetic-flux generation surface is the curved surface with a smaller curvature than the fixed surface fixed to the rotor yoke as described above, variation in magnetic flux is gradual in the vicinity of the end surface of the segment magnet in the circumferential direction, therefore, it is possible to reduce the cogging torque, and further, when the anisotropic ferrite sintered magnet is used, it is possible to provide magnets suitable for mass production and having excellent weatherability at low costs.

It is preferable that a side-surface edge portion on an outer peripheral side adjacent to the fixed surface where the segment magnet is fixed to the rotor yoke is formed in an R-plane.

According to the above, variation in magnetic flux is gradual in the vicinity of an end surface of the segment magnet in the circumferential direction and the cogging torque can be reduced, and further, it is possible to provide magnets capable of preventing chipping of magnets and having high durability.

It is preferable that a side-surface edge portion on an inner peripheral side adjacent to the magnetic-flux generation surface in the segment magnet is formed in an R-plane.

Accordingly, it is possible to prevent fracture of the segment magnets.

### Advantageous Effects of Invention

The outer rotor type motor including the rotor magnet capable of reducing the cogging torque for realizing smooth rotation of the rotor and having high durability and weatherability is provided.

### Brief Description of Drawings

Fig. 1 is a cross-sectional explanatory view for an outer rotor type DC brushless motor in an axial direction.
Fig. 2 is a horizontal sectional view showing an arrangement structure of a stator core and a rotor of Fig. 1.
Fig. 3 is a perspective view showing the arrangement structure of the stator core and the rotor of Fig. 1.
Fig. 4 is a horizontal sectional view of a segment magnet.
Fig. 5 is a perspective view of the segment magnet.
Fig. 6 is an explanatory view showing an arrangement structure of a stator and a rotor in a related-art outer rotor type DC brushless motor.

### Description of Embodiments

Hereinafter, an embodiment of a brushless motor according to the present invention will be explained with reference to the attached drawings. In the embodiment, explanation will be made by using an outer rotor type three-phase DC brushless motor as an example.

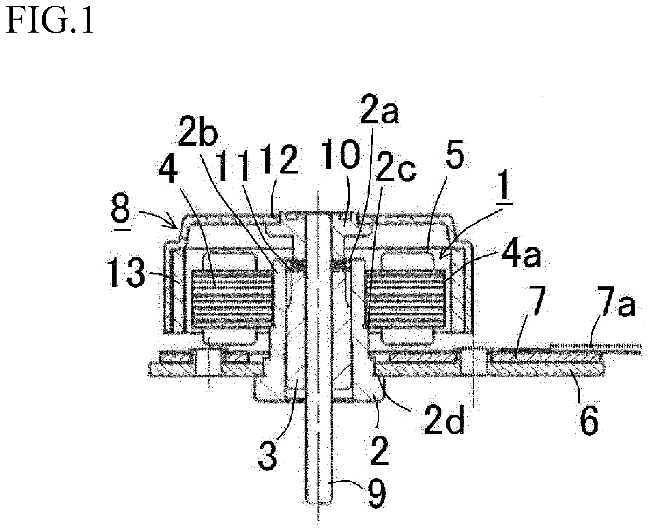

Referring to Fig. 1, a schematic structure of an outer rotor type three-phase DC brushless motor will be explained. A structure of a stator 1 will be explained. A cylindrical metal oil-retaining bearing 3 formed of sintered metal is coaxially fastened to a shaft hole 2a of a housing 2 formed in a cylindrical shape. A stator core 4 is bonded and fixed so as to abut on a stepped portion 2c along one end-side end portion 2b and an outer peripheral portion of the housing 2. The stator core 4 is a laminated core, in which coils 5 are respectively wound around plural pole teeth 4a radially provided to protrude toward an outer peripheral side in plan view.

Moreover, a large-diameter stepped portion 2d is formed in an outer periphery on the other end side of the housing 2, and an attachment plate 6 is attached to the stepped portion 2d by being press-fitted or by being caulked. A motor substrate 7 is fixed to the attachment plate 6. A sensor substrate (not shown) on which a hall device and so on are mounted is provided on the motor substrate 7. A wiring 7a for feeding power is connected to the motor substrate 7.

Next, a structure a rotor 8 will be explained with reference to Fig. 1. A rotor hub 10 formed by performing press working on a sheet metal such as brass is press-fitted and fixed to one side of a rotor shaft 9. A rotor yoke 12 formed in a cup shape is caulked and integrally fastened to the rotor hub 10. Rotational motion of the rotor 8 is supported by the metal oil-retaining bearing 3 inserted into a cylindrical hole of the housing 2 into which the rotor shaft 9 is inserted. A vertical load of the rotor 8 is supported by a washer 11 provided between the rotor hub 10 and the metal oil-retaining bearing 3.

A magnetic body is used for the rotor yoke 12. An annular rotor magnet 14 is mounted on an inner peripheral surface of the rotor yoke 12 so that segment magnets 13 in which N-poles and S-poles are alternately magnetized in a radial direction are bonded at prescribed intervals. The rotor magnet 14 having a size in which a length in an axial direction is larger than a length in an axial direction of the pole tooth 4a of the stator core 4 is used. After the stator 1 is assembled, the rotor 8 is fitted so that the rotor shaft 9 is inserted into the metal oil-retaining bearing 3. At this time, assembling is performed so that the pole teeth 4a of the stator core 4 face the rotor magnet 14. The rotor 8 is assembled so that the rotor magnet 14 is magnetically attracted to face stator pole teeth 4a and that the rotor shaft 9 is pivotally supported in the housing 2 so as to rotate through the metal oil-retaining bearing 3.

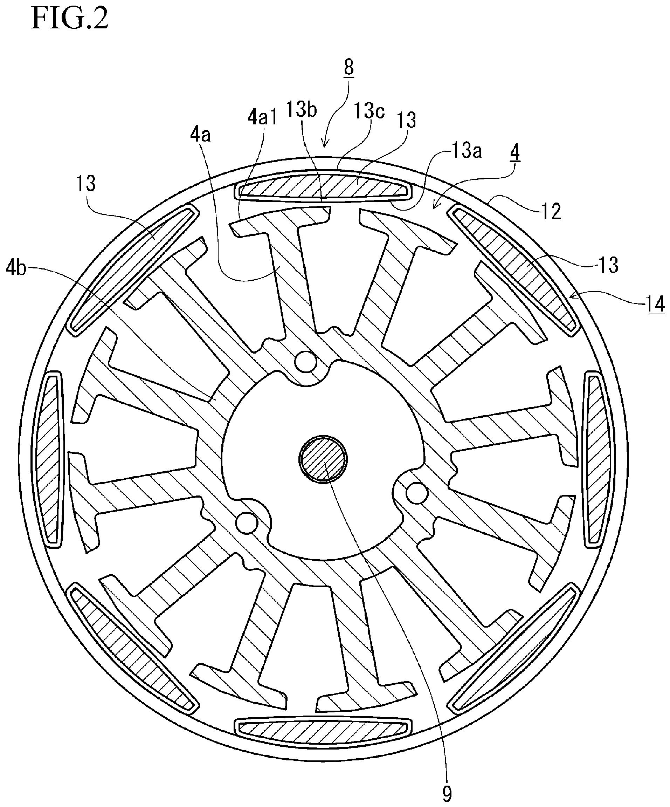

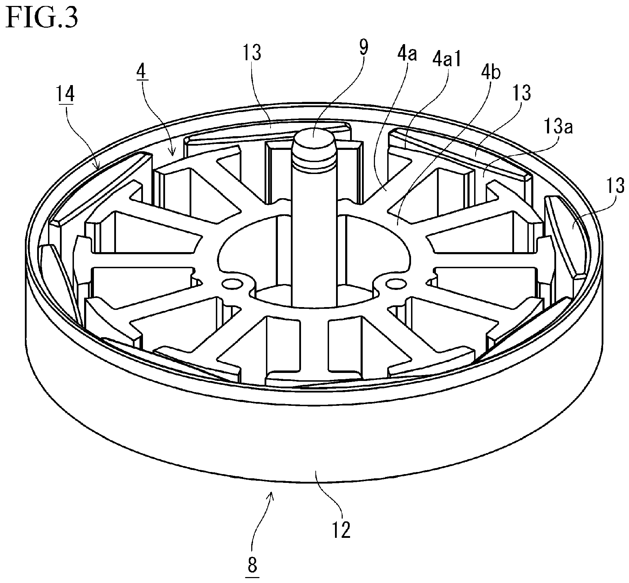

Next, a form of the stator core 4 will be explained in detail with reference to Fig. 2 and Fig. 3.

12-poles (12 slots) of pole teeth 4a provided in total in the stator core 4 are radially provided to protrude from an annular core back portion 4b. Teeth tips 4a1 to be magnetic-flux action surfaces of the pole teeth 4a have a symmetrical shape with respect to an axial line in the radical direction, which are arranged so as to face the rotor magnet 14, on which an attraction force acts.

Next, a structure of the rotor magnet 14 will be explained with reference to Fig. 2 to Fig. 5.

As shown in Fig. 2 and Fig. 3, the rotor magnet 14 is fixed to the inner peripheral surface of the rotor yoke 12 so as to be divided into the segment magnets 13 of eight positions (8-poles) in the circumferential direction. In the respective segment magnets 13, the magnetization direction is parallel orientation with respect to the plate thickness, and for example, an anisotropic ferrite sintered magnet is used. Magnetization of the rotor magnet 14 is performed by forming magnetic fields in a parallel direction to a clamp pressure by field coils while clamping a magnetic body powder material by a molding die.

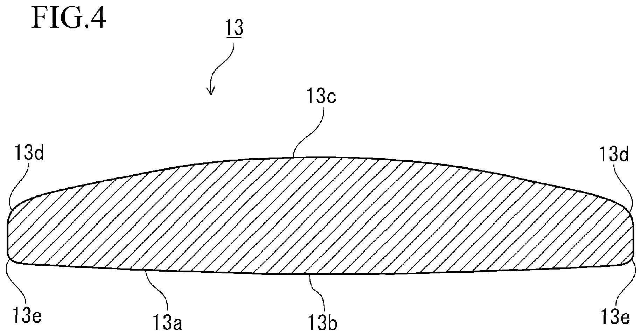

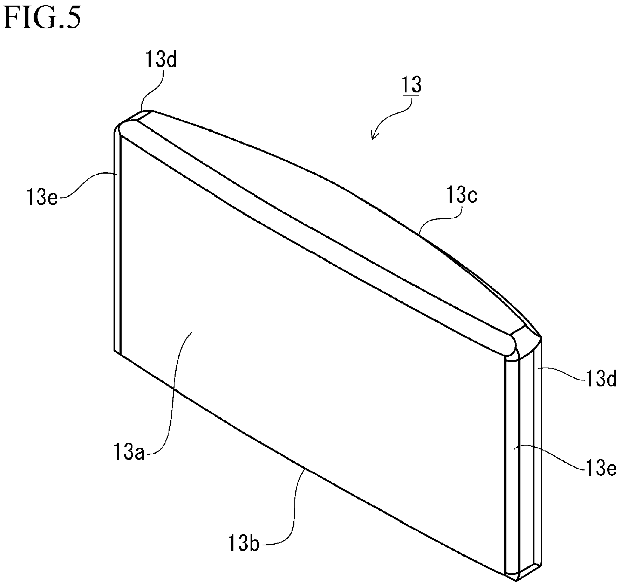

As shown in Fig. 4 and Fig. 5, a central portion 13b of a magnetic-flux generation surface 13a in each segment magnet 13 facing the magnetic-flux action surface of the stator pole tooth 4a is formed in a convex surface where an interval between the central portion 13b and the stator pole tooth 4a is the smallest (refer to Fig. 2). Specifically, the magnetic-flux generation surface 13a (R200) of the segment magnet 13 is formed to have a curved surface with a smaller curvature than a fixed surface 13c (R97.6) bonded and fixed to the rotor yoke 12. Accordingly, the variation of the magnetic flux is gradually reduced in the vicinity of an end surface in the circumferential direction, therefore, it is possible to reduce the cogging torque as compared with a case where magnets having the uniform plate thickness are used.

Also as shown in Fig. 4 and Fig. 5, a side-surface edge portion 13d on an outer peripheral side adjacent to the fixed surface 13c where the segment magnet 13 is fixed to the rotor yoke 12 is formed in an R-plane. Accordingly, it is possible to reduce the cogging torque and prevent chipping of the segment magnet 13.

Furthermore, a side-surface edge portion 13e on an inner peripheral side adjacent to the magnetic-flux generation surface 13a in the segment magnet 13 is formed in an R-plane. Accordingly, it is possible to prevent fracture of the segment magnet 13.

Though the anisotropic ferrite sintered magnet is used as an example of the rotor magnet 14, the present invention is not limited to this, and a neodymium magnet, a samarium-cobalt magnet or the like may be used.

The number of the segment magnets 13 (number of poles) in the rotor magnet 14 is not limited to 8-poles and may be 10-poles, 12-poles and so on.

## Claims

1. An outer rotor type motor comprising:
a stator (1) having a stator core (4) in which coils (5) are wound around stator pole teeth (4a); and
a rotor (8) in which a rotor shaft (9) integrally fastened to a central part of a rotor yoke (12) having a rotor magnet (14) facing the stator pole teeth (4a) is pivotally supported so as to rotate,
wherein the rotor magnet (14) is arranged so as to be divided into plural segment magnets (13) on an inner peripheral surface of the rotor yoke (12) in a circumferential direction, and
an anisotropic magnet having parallel orientation is used as each segment magnet (13) and a central portion (13b) of a magnetic-flux generation surface (13a) facing a magnetic-flux action surface of the stator pole tooth (4a) is formed in a convex surface where an interval with respect to the stator pole tooth (4a) is the smallest.

2. The outer rotor type motor according to claim 1,
wherein an anisotropic ferrite sintered magnet is used as the segment magnet (13), and
the magnetic-flux generation surface (13a) is a curved surface with a smaller curvature than a fixed surface (13c) fixed to the rotor yoke (12).

3. The outer rotor type motor according to claim 1 or 2,
wherein a side-surface edge portion (13d) on an outer peripheral side adjacent to the fixed surface (13c) where the segment magnet (13) is fixed to the rotor yoke (12) is formed in an R-plane.

4. The outer rotor type motor according to any one of claims 1 to 3,
wherein a side-surface edge portion (13e) on an inner peripheral side adjacent to the magnetic-flux generation surface (13a) in the segment magnet (13) is formed in an R-plane.
